# EUROPÄISCHE PATENTSCHRIFT

(11) **EP 2 090 262 B1**
(45) Veröffentlichungstag und Bekanntmachung des Hinweises auf die Patenterteilung: **15.05.2013**
(21) Anmeldenummer: 09152063.5
(22) Anmeldetag: 04.02.2009
(51) Int. Cl.: A61C 5/06

(54) **Dentalgerät**
Dental device
Appareil dentaire

(30) Priorität: 13.02.2008 DE 102008008919
(43) Veröffentlichungstag der Anmeldung: 19.08.2009
(73) Patentinhaber: Ivoclar Vivadent AG, 9494 Schaan (LI)
(72) Erfinder: Müller, Wolfgang, 9443 Widnau (CH)
(74) Vertreter: Baronetzky, Klaus

(56) Entgegenhaltungen:
- DE-U1- 9 309 794
- DE-U1-202006 019 709
- US-A- 4 125 335

## Beschreibung

Die Erfindung betrifft ein Dentalgerät, gemäß dem Oberbegriff des Anspruchs 1, das insbesondere als dentales Mischgerät ausgebildet ist.

Ein derartiges Dentalgerät ist beispielsweise aus der DE-GM 93 09 794 bekannt. Die dort beschriebene Rüttelvorrichtung weist Lagerstellen eines Rahmens auf, der so abgestimmt ist, dass beim Rütteln von Dentalmaterialien wie Gips, Amalgam oder dergleichen, die Eigenfrequenz des Rahmens zusammen mit der Rüttelvorrichtung möglichst schnell erreicht wird. Hierzu ist der Rahmen an Lagerstellen zwischen zwei elastisch vorgespannten Dämpfungselementen eingespannt. Die Dämpfungselement werde von einem Stift durchtreten, der sie zusammendrückt und insofern unter Vorspannung setzt.

Hierzu ist ein Gewindestift vorgesehen, der die Dämpfungselemente durchtritt und dessen wirksame Länge über eine Kontermutter einstellbar ist. Der Stift ist an dem Gehäuse gelagert, wobei die Lagerung über Sicherungsscheiben und zusätzlich über Zentrierscheiben erfolgt.

Nachteilig bei dieser Lösung ist die vergleichsweise schlechte seitliche Führung. Es hat sich gezeigt, dass bei der bekannten Rüttelvorrichtung durch die eingeleiteten Schwingungen Relativbewegungen zwischen den Unterlegscheiben einerseits und den Federelementen andererseits entstehen, zumal die Rüttelbewegung typischerweise über einen Elektromotor realisiert ist und sich insofern als Kreisbewegung oder elliptische Bewegung darstellt, nicht hingegen als reine Vertikalbewegung.

Die Relativbewegungen führen auf Dauer zum Verschleiß an dieser Stelle, was die Langzeitstabilität der Rüttelvorrichtung beeinträchtigt.

Ein weiterer Nachteil der bekannten Rüttelvorrichtung liegt in der Abhängigkeit der Rüttelvorrichtung von der Menge des zu rüttelnden Dentalmaterials begründet. Bei einem starken Füllungsgrad muss relativ viel Masse im Vergleich zur Masse der Rüttelvorrichtung bewegt werden, so dass die Rüttelvorrichtung gleichsam ins Hüpfen gerät. Dies belastet die Unterlage, beispielsweise den betreffenden Tisch in der Zahnarztpraxis oder dem Dentallabor, auf dem die Rüttelvorrichtung aufgestellt ist. Außerdem werden durch das Mitschwingen des Gehäuses die dort vorgesehenen Kabeldurchführungen, Lager usw. vergleichweise stark belastet.

Aus der Druckschrift DE 20 2006 019 709 U1 ist eine dentale Amalgam-Mischvorrichtung bekannt, die eine Dämpfungs- und Stoßdämpferanordnung aufweist, um Schwingungen während des Betriebs zu absorbieren bzw. zu dämpfen. Die Amalgam-Mischvorrichtung weist ein Gehäuse und einen wenigstens teilweise im Gehäuse angeordneten Rahmen auf, der eine Antriebsquelle sowie einen Antriebsarm trägt, wobei mindestens zwei Dämpfereinheiten innerhalb des Gehäuses gelagert sind. Jede Dämpfereinheit umfasst ein erstes Dämpfungselement und ein zweites Dämpfungselement, die komprimiert werden können und eine elastische Rückstellkraft erzeugen können, wenn diese komprimiert werden. Des Weiteren umfasst jede Dämpfereinheit eine Mehrzahl von Unterlegscheiben, die sich auf der oberen und unteren Stirnseite der ersten und zweiten Dämfpungselemente befinden. Die erste Dämpfereinheit ist mit einer Bodenplatte des Gehäuses verbunden und mittels einer transversalen Halteplatte - mit der zweiten Dämpfereinheit. Beide Dämpfereinheiten sind somit über die Halteplatte mit Hilfe einer Mehrzahl von Schrauben mit dem Rahmen des Gehäuses befestigt, was die Konstruktion wesentlich erschwert und auch die Unterlage, auf welche die Mischvorrichtung aufgestellt wird, erheblich belastet.

Daher liegt der Erfindung die Aufgabe zugrunde, ein Dentalgerät gemäß dem Oberbegriff des Anspruchs 1 zu schaffen, das hinsichtlich der Langzeitstabilität verbessert ist, und zwar sowohl geräteinwendig als auch hinsichtlich des Unterlage des Geräts.

Diese Aufgabe wird erfindungsgemäß durch den Anspruch 1 gelöst. Vorteilhafte Weiterbildungen ergeben sich aus den Unteransprüchen.

Erfindungsgemäß ist es vorgesehen, dass das Gehäuse selbst für die Bildung von Anschlagflächen für die Dämpfungselemente eingesetzt wird. Hierdurch lässt sich eine seitliche Verlagerung und Relativbewegung zwischen den Enden der Dämfungselemente und dem Gehäuse vermeiden bzw. umständlich machen. Auch wenn beispielsweise an der Oberseite der Dämpfungselemente an der oberen Anschlagfläche des Gehäuses eine Lagerscheibe vorgesehen ist, kann diese fest eingepresst in dem Gerätegehäuse vorgesehen sein. Durch die Verwendung von Elastomerschaum für die Dämpfungselemente anstelle von Spiralfedern sind die Lagerstellen ohnehin weniger belastet, nachdem typischerweise auch hart hergestellter Elastomerschaum wesentlich weicher als Metall ist. Erfindungsgemäß ist gemäß einem weiteren Aspekt der Erfindung der Standfuß in besonderer Weise ausgebildet, so dass sich durch den Aufstandsdruck des Dentalgeräts auf der jeweiligen Lagerstelle der Standfuß so verformt, dass die Einfederung durch den Aufstandsdruck mindestens teilweise kompensiert wird. Dieses Merkmal ist weiter unten anhand der Beschreibung näher erläutert.

Der Aufstandsdruck des Dämpfungselements, auf dem der Rahmen abgestützt ist, wirkt erfindungsgemäß für eine in dem Standfuß vorgesehene Mulde ausflachend, während ein Kippmoment, das zwischen dem die Mulde umgebenden Aufstandsring des Aufstandsfußes und einem gehäusefesten Bereich des Standfußes erzeugt wird, die Mulde vertiefend wirkt. Die gegenüber einem imaginären Drehpunkt wirkenden Hebel sind insofern entgegengesetzt und bei Lasteinleitung, beispielsweise durch die Rüttelbewegung, wird das von dem Rahmen induzierte Kippmoment um diesen imaginären Drehpunkt durch das entgegengesetzte Kippmoment zwischen Gehäuse und Aufstandsring kompensiert. Die Zunahme der nach unten wirkenden Kraft auf die untere Anschlagfläche führt zur Zunahme auch einer Gegenkraft, die die Unterlage auf den Aufstandsring erzeugt, so dass die Krafteinleitungen je proportional stattfinden und insofern eine Kompensation möglich ist.

In vorteilhafter Ausgestaltung ist es vorgesehen, dass die nach oben weisende Anschlagfläche des Gehäuses im Bereich des Standfußes und bevorzugt auf diesem Standfuß vorgesehen ist. Gerade hierdurch lässt sich die erwünschte Krafteinleitung besonders günstig realisieren, und die seitliche Führung lässt sich durch geeignete Formgebung des Dämpfungselements einerseits und des Standfußes andererseits optimieren.

Besonders günstig ist es, wenn das obere Dämpfungselement weicher als das untere Dämpfungselement ausgebildet ist. Die Hauptkraft erfolgt durch das Gewicht des Rahmens nach unten, so dass die Kraftunterschiede beim Einspannen kompensiert werden und beide Dämpfungselemente um etwa den gleichen Betrag zusammengepresst werden.

Die Vorspannung lässt sich in beliebiger geeigneter Weise fix einstellen, durch geeignete Wahl der Abmessungen des Gehäuses, wobei bevorzugt die Vorspannung weniger als 30 Prozent, bevorzugt lediglich 10 bis 20 Prozent der eingeleiteten Kräfte beträgt.

Erfindungsgemäß besonders günstig ist es, wenn ein Führungselement vorgesehen ist, dass den Rahmen seitlich an den Dämpfungselementen führt. Das Führungselement kann entweder als die Dämpfungselemente unmittelbar umgreifende Führungshülse oder als Führungsstift ausgebildet sein, der die Dämpfungselemente innen in einer Durchgangsbohrung ausfüllt, wobei die Höhe des Führungsstifts jedoch bevorzugt so gewählt ist, dass der Führungsstift je etwas weniger als die Hälfte der Höhe der betreffenden Durchgangsbohrung einnimmt.

Bevorzugt ist der Standfuß aus einem harten Elastomer ausgebildet, wobei die vorstehend erläuterte Verformung jedoch zusätzlich der Dämpfung der Schwingungsübertragung von der Rütteleinrichtung auf die Unterlage dient.

Bevorzugt weist das Gehäuse eine Bodenplatte auf, in der die Standfüße gelagert sind. Es ist zweiteilig, und ein innenliegender oberer Gehäuseteil ist mit dem umgebenden Gehäuseteil fest verschraubt. Die Bodenplatte als Teil des Gehäuses ist bevorzugt in der umlaufenden Nut des Standfußes aufgenommen, wobei der Standfuß kreisförmig sein kann, aber auch beispielsweise quadratisch mit abgerundeten Ecken. Bevorzugt weist er an seiner Unterseite eine muldenartige Vertiefung auf, und die untere, nach oben weisende Anschlagfläche des Gehäuses ist am Boden einer hülsenartigen Vertiefung des Standfußes vorgesehen, der zudem zur Verbesserung der seitlichen Führung einen Mittelzapfen aufweist.

Insofern ist bevorzugt der untere Bereich des unteren Dämpfungselements von dem Standfuß umgeben und zusätzlich an dem Mittelzapfen, der mit seiner Durchgangsbohrung zusammenwirkt, seitlich geführt. Der Standfuß ragt bevorzugt um weniges gegenüber dem Dentalgerät nach unten vor, und bevorzugt ist der Standfuß so ausgebildet, dass er von unten in die Bodenplatte einschnappbar ist.

Erfindungsgemäß ist es damit vorgesehen, dass das Gehäuse des erfindungsgemäßen Dentalgeräts, das bevorzugt als dentales Mischgerät oder Rüttelgerät ausgebildet ist, schon recht wenig schwingt, auch wenn große Mengen von Dentalmaterial bearbeitet werden, und dass die Unterlage, auf der das Dentalgerät aufgestellt ist, einer noch geringeren Belastung unterworfen ist. Diesem Gesichtspunkt kommt zugute, wenn der Motor mit dem Mischarm über ein elastisches Lagerelement oder zusätzliches Federelement auf dem Rahmen gelagert ist. Das Federelement ermöglicht bereits eine Schwingungsreduktion für den Rahmen gegenüber der Schwingung des Motors, so dass insofern eine doppelte Schwingungsentkopplung realisierbar ist.

Die Resonanzfrequenzen sowohl des Rahmens als auch des Gehäuses lassen sich in weiten Bereichen an die Erfordernisse anpassen. Beispielsweise kann die Resonanzfrequenz des Gehäuses auf einen Wert justiert werden, der deutlich verschieden von der Erregerfrequenz ist, also beispielsweise ein Drittel bis ein Fünftel diese Erregerfrequenz beträgt.

In einer weiteren vorteilhaften Ausgestaltung ist es vorgesehen, dass das untere Dämpfungselement auf einem Standfuss abgestützt ist.

In einer weiteren vorteilhaften Ausgestaltung ist es vorgesehen, dass ein Führungselement, insbesondere ein Führungsstift, wenigstens teilweise in das obere und das untere Dämpfungslement hineinragt und dass das Führungselement auch eine Durchtrittsöffnung des Rahmens durchsetzt.

In einer weiteren vorteilhaften Ausgestaltung ist es vorgesehen, dass das obere Dämpfungselemente weicher ist als das untere Dämpfungselement.

In einer weiteren vorteilhaften Ausgestaltung ist es vorgesehen, dass jedes Dämpfungslement hülsenförmig ausgebildet ist und eine zentrale Durchgangsbohrung aufweist, deren Durchmesser im Wesentlichen dem Durchmesser des Führungsstiftes entspricht.

In einer weiteren vorteilhaften Ausgestaltung ist es vorgesehen, dass die Dämpfungselemente aus einem Elastomerschaum, insbesondere aus Polyurethan, von einer Druckfeder oder einem anpassbaren Luftkissen gebildet sind.

In einer weiteren vorteilhaften Ausgestaltung ist es vorgesehen, dass die erste, nach oben weisende Anschlagfläche des Gehäuses Teil eines Standfusses ist, der eine Durchgangsbohrung des Gehäuses durchsetzt und das Gehäuse in vertikaler Richtung nach unten überragt.

In einer weiteren vorteilhaften Ausgestaltung ist es vorgesehen, dass ein Standfuss das untere Dämpfungselement abstützt und insbesondere aus einem harten Elastomer gebildet ist und dass insbesondere der untere Bereich des unteren Dämpfungselementen von dem Standfuss umgeben ist.

In einer weiteren vorteilhaften Ausgestaltung ist es vorgesehen, dass der Standfuss an seiner Unterseite eine muldenartige Vertiefung aufweist und an seiner kreisrunden Außenkontur eine umlaufende Nut besitzt, in welche der Randbereich der Durchgangsbohrung des Gehäuses ragt.

In einer weiteren vorteilhaften Ausgestaltung ist es vorgesehen, dass das Führungselement fest in der Durchtrittsöffnung des Rahmens angeordnet ist.

In einer weiteren vorteilhaften Ausgestaltung ist es vorgesehen, dass der obere Bereich des oberen Dämpfungslement von einem Teil des Gehäuses umgeben ist und sich insbesondere gegen das Gehäuse abstützt.

In einer weiteren vorteilhaften Ausgestaltung ist es vorgesehen, dass das Gehäuse wenigstens zweiteilig ausgebildet ist und dass insbesondere das Gehäuse nach der Art einer Verkleidung den Rahmen abdeckt.

In einer weiteren vorteilhaften Ausgestaltung ist es vorgesehen, dass der Motor und/oder der Mischarm in einem sich an dem Rahmen abstützenden Federelement, insbesondere am harten Elastomerteil gelagert sind.

In einer weiteren vorteilhaften Ausgestaltung ist es vorgesehen, dass die mindestens eine Lagerstelle und/oder das Gehäuse an einem Standfuss abgestützt ist, der sich durch den Aufstandsdruck der Lagerstelle so verformt, dass die Einfederung durch den Aufstandsdruck mindestens teilweise kompensiert wird.

In einer weiteren vorteilhaften Ausgestaltung ist es vorgesehen, dass oberhalb des Standfusses und insbesondere auf diesen abgestützt das untere Dämpfungslement und auf diesem das obere Dämpfungslement angebracht sind und dass der Rahmen zwischen diesen eingespannt ist.

In einer weiteren vorteilhaften Ausgestaltung ist es vorgesehen, dass der Motor über mindestens ein elastisches Lagerelement an dem Rahmen gelagert ist und dass das Federelement insbesondere an dem Rahmen für die Montage einschnappbar ist.

In einer weiteren vorteilhaften Ausgestaltung ist es vorgesehen, dass durch die Gewichtskraft des Dentalgeräts ein Kippmoment auf den Standfuss eingeleitet wird, das den Boden des Standfusses anzuheben neigt.

In einer weiteren vorteilhaften Ausgestaltung ist es vorgesehen, dass durch die Gewichtskraft des Dentalgeräts der Standfuss komprimiert und hierdurch eine vertikal nach unten wirkende Kraftkomponente auf den Standfuss eingeleitet wird, die dazu neigt, den Boden des Standfusses abzusenken.

In einer weiteren vorteilhaften Ausgestaltung ist es vorgesehen, dass die Standfüsse des Dentalgeräts mit ihrer Lagerstelle innenliegend in den Dentalgerät aufgenommen sind und der Aufstandbereich jedes Standfusses gegenüber dem Dentalgerät im übrigen um weniges, insbesondere um weniger als einen Zentimeter, vorspringt.

In einer weiteren vorteilhaften Ausgestaltung ist es vorgesehen, dass der Rahmen des Dentalgeräts an dem Standfuss abgestützt ist und das Gehäuse nach der Art einer Verkleidung den Rahmen abdeckt.

In einer weiteren vorteilhaften Ausgestaltung ist es vorgesehen, dass der Standfuss je im Wesentlichen kreissymmetrisch ausgebildet ist und eine vertikale Bewegungsachse aufweist, bezogen auf welche sich der Standfuss bei Zunahme der Belastung symmetrisch verformt.

In einer weiteren vorteilhaften Ausgestaltung ist es vorgesehen, dass der Standfuss über ein Gelenk an der Bodenplatte geführt ist und zentral über das Hauptlager an dem Rahmen des Dentalgeräts abgestützt ist.

Weitere Vorteile, Einzelheiten und Merkmale ergeben sich aus der nachfolgenden Beschreibung zweier Ausführungsbeispiele der Erfindung anhand der Zeichnungen.

Es zeigen:
- Fig. 1: eine schematische Ansicht eines Rahmens mit Motor- und Mischarm als Teil des erfindungsgemäßen Dentalgeräts;
- Fig. 2: eine Schnittdarstellung einer Lagerstelle eines erfindungsgemäßen Dentalgeräts;
- Fig. 3: einen Schnitt durch einen erfindungsgemäßen Standfuß in unbelastetem Zustand;
- Fig. 4: den Standfuß gemäß Fig. 3 in belastetem Zustand;
- Fig. 5: eine weitere Ausführungsform eines erfindungsgemäßen Dentalgeräts in teilweiser aufgebrochener Darstellung; und
- Fig. 6: eine Ausschnittsvergrößerung zu Fig. 5.

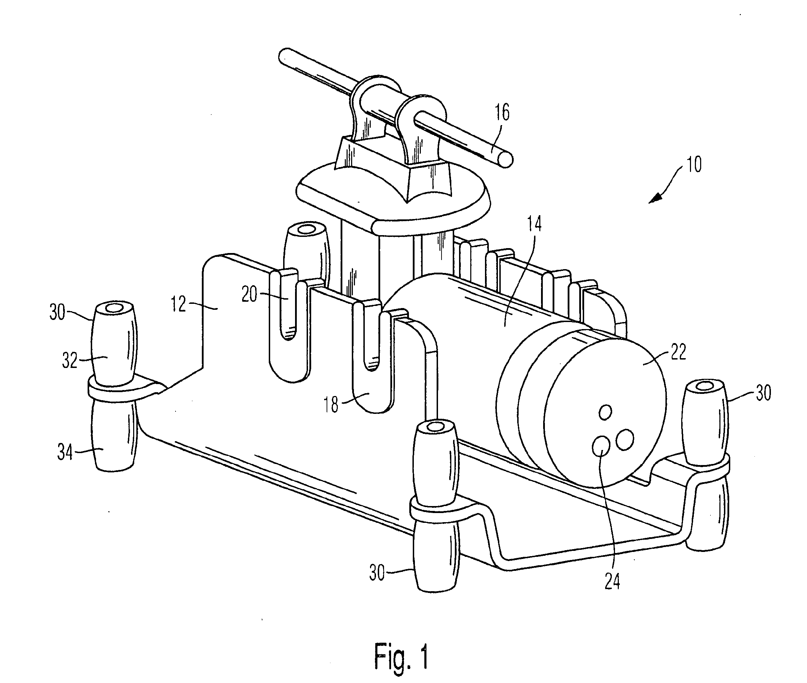

Die in Fig. 1 dargestellte Ausführungsform eines Dentalgeräts 10 weist einen Rahmen 12 auf, der einen Motor 14 trägt, der einen Mischarm 16 antreibt. In an sich bekannter Weise weist der Motor hierzu ein asymmetrisches Lager auf, das den Mischarm 16 in eine Schwingungsbewegung versetzt.

Der Mischarm 16 ist über Federelemente 18 an dem im Wesentlichen U-förmigen Rahmen 12 gelagert. In dem dargestellten Ausführungsbeispiel weist der Motor hierzu nicht dargestellte Zapfen auf, die in V-förmigen Ausschnitten 20 ruhen, die in den Federelementen 18 vorgesehen sind. Die Federelemente 18 sind in passende Ausnehmungen der Seitenschenkel des Rahmens 12 eingeschnappt, so dass der Motor 14 insofern federnd an dem Rahmen 12 aufgehängt ist.

Der Motor 14 weist ferner eine Schwungscheibe 22 mit einer asymmetrischen Masse auf, die als Massenausgleich für die Bewegungen des Mischarms 16 dient, wobei hierzu entsprechende Bohrungen 24 in der Schwungscheibe 22 asymmetrisch vorgesehen sind.

Der Rahmen 12 ist an vier Lagerstellen an einem Gehäuse des Dentalgeräts 10 gelagert, von denen drei Lagerstellen ersichtlich sind. Jede Lagerstelle 30 weist ein oberes Dämpfungselement 32 und ein unteres Dämpfungselement 34 auf. In dem dargestellten Ausführungsbeispiel ist das obere Dämpfungselement 32 mit seinem oberen Ende an einer nach unten weisenden Anschlagfläche des Gehäuses abgestützt, und das untere Dämpfungselement 34 ist an seinem unteren Ende an einer nach oben weisenden Anschlagfläche des Gehäuses abgestützt. Das obere Dämpfungselement 32 ist je weicher als das untere Dämpfungselement 34, das je zusätzlich das Gewicht des Motors, des Mischarms und des Rahmens tragen muss.

Wie aus Fig. 1 ersichtlich ist, sind die Dämpfungselement 32 und 34 je leicht ballig. Sie bestehen bevorzugt aus Polyurethan-Elastomerschaum, wobei grundsätzlich aber auch eine Realisierung durch eine Spiral-Druckfeder möglich ist.

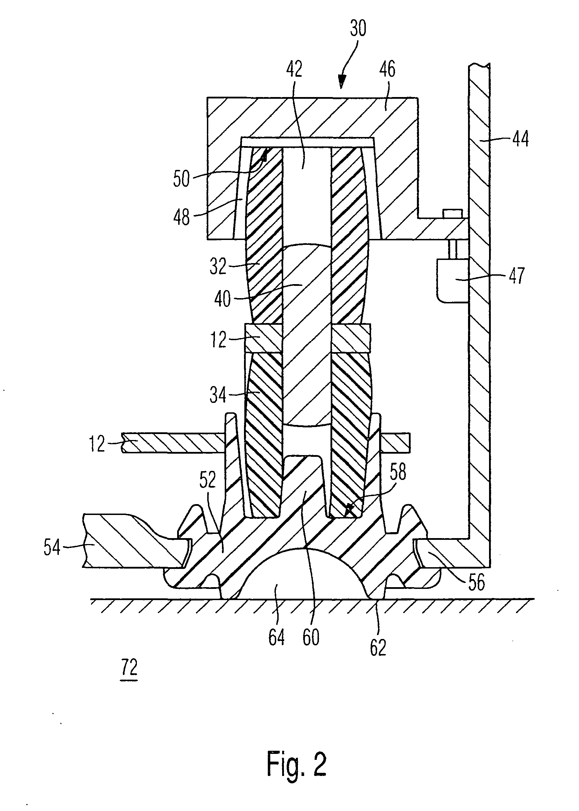

Fig. 2 zeigt eine Lagerstelle 30 in vergrößerter Darstellung und im Schnitt. Hier wie auch in den weiteren Figuren weisen gleiche Bezugszeichen auf gleiche Teile hin. Es ist ersichtlich, dass der Rahmen 12 zwischen dem oberen Dämpfungselement 32 und dem unteren Dämpfungselement 34 eingespannt gehalten ist. Hierzu ist an dem Rahmen 12 fest gelagert ein Führungsstift 40 vorgesehen, der in Durchgangsbohrungen 42 in dem Dämpfungselement 32 und 34 geführt ist und eine seitliche Abstützung des Rahmens 12 erzeugt.

Die Dämpfungselemente 32 und 34 sind von einem Gehäuse 44 eingespannt gehalten. Das Gehäuse 44 weist einen oberen Teil 46 auf, der eine topfförmige Ausnehmung 48 aufweist, in dem das obere Ende des Dämpfungselements 32 geführt ist. Dort wird insofern eine nach unten weisende Anschlagfläche 50 des Gehäuses ausgebildet. Zwischen dem oberen Teil 46 der Gehäuses und dem Gehäuse 44 im übrigen ist zudem eine Verschraubung 47 angebracht, die beide Teile gegeneinander verspannt und hierdurch die Dämpfungselemente 32 und 34 unter Vorspannung setzt.

Als Teil des Gehäuses 44 ist zudem ein Standfuß 52 realisiert, der in einer Bodenplatte 54 des Gehäuses 44 gelagert ist, und zwar über eine Nut 56, die umlaufend an dem Standfuß 52 ausgebildet ist.

Der Standfuß 52 bildet eine nach oben weisende Anschlagfläche 58 des Gehäuses, die das Dämpfungselement 34 abstützt. Dort ist zudem eine Seitenführung über einen Mittelzapfen 60 gebildet, der sich von dem Standfuß 52 ausgehend in die Durchgangsbohrung hinein erstreckt.

Beim Einfedern durch Belastung des Rahmens 12 nach unten wird das untere Dämpfungselement 32 komprimiert und verdickt sich hinsichtlich seiner Wandstärke insofern, während das obere Dämpfungselement leicht entspannt wird. Die Entspannung erfolgt jedoch lediglich in einem solchen Maße, dass stets eine Anlage an der oberen Anschlagfläche 50 gewährleistet ist. Insofern wird durch das Zusammenwirken der Teile 46 und 52 des Gehäuses 44 eine Vorspannung auf die Dämpfungselemente 32 und 34 eingeleitet und der Rahmen 32 unter Spannung zwischen diesen gehalten.

Der Standfuß 52 wird durch die zusätzliche Gewichtsbelastung im Bereich der Anschlagfläche 53 belastet. Dort ist im auswärtigen Bereich eine ringförmige Aufstandsfläche 62 vorgesehen, die sich um eine nach der Art einer negativen Kalotte gebildeten Mulde 64 erstreckt. Im inneren Bereich der Anschlagfläche 58 erstreckt sich insofern die Mulde 64.

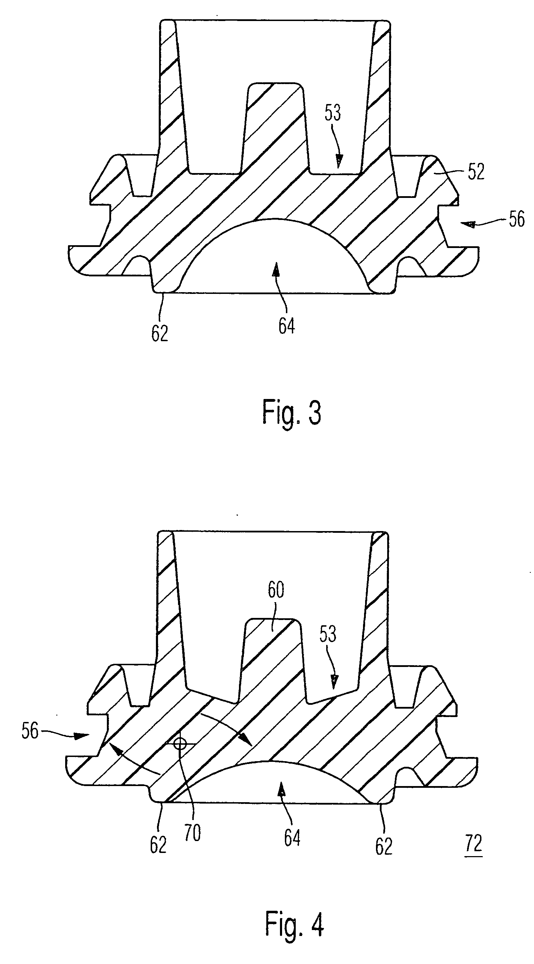

Die in Fig. 2 dargestellte Position des Standfußes 52 ist in Fig. 3 nochmal dargestellt. Demgegenüber ist in Fig. 4 der Standfuß in dem zusätzlich belastetem Zustand dargestellt. In diesem Zustand ist die Mulde 64 deutlich flacher. Durch den zusätzlichen Aufstandsdruck an der Aufstandsfläche 53 verformt sich diese, schwerpunktmäßig im zentralen Bereich, also dem Mittelzapfen 60 benachbart. Um eine imaginären Drehpunkt 70 ersteht insofern ein Kippmoment, das die Mulde 64 flacher macht.

Andererseits wird durch die zusätzliche Belastung des Rahmens auch der Gegendruck über das Gewicht insgesamt erhöht, der insofern im Bereich der Nut 56 angreift. Insofern entsteht ein entgegenwirkender Druck um den Drehpunkt 70, und bei richtiger Auslegung werden diese beiden Momente so kompensiert, dass auch bei zusätzlicher Belastung der Standfuß nicht zusätzlich einfedert, der Abstand zwischen der Unterlage 72 und der Nut 56 und damit dem Gehäuse 44 also insofern konstant bleibt.

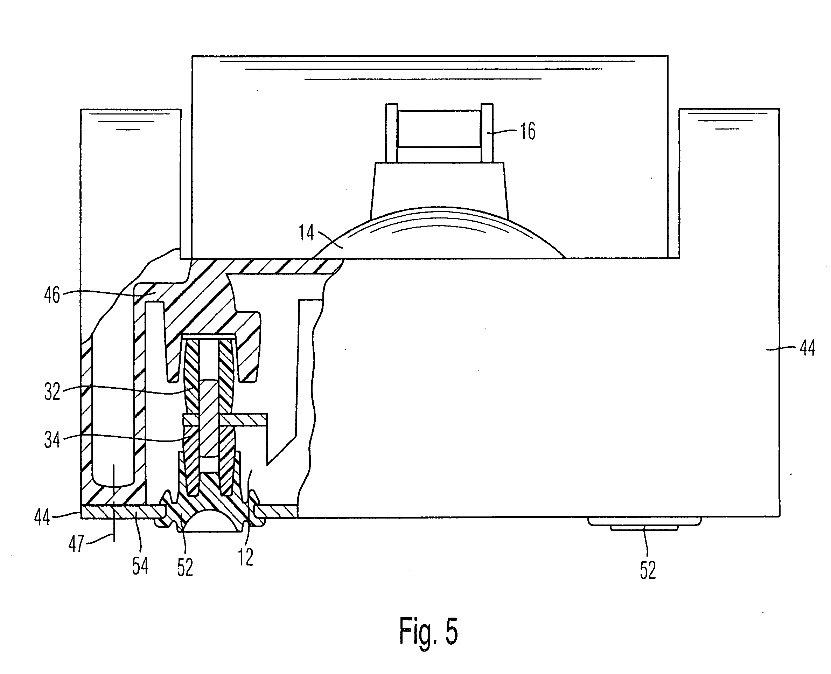

Eine weitere Ausführungsform eines erfindungsgemäßen Dentalgerätes ist aus Fig. 5 ersichtlich. Auch hier weisen entsprechende Bezugszeichen auf gleiche oder entsprechende Teile hin. Bei dieser Lösung ist der obere Teil 46 des Gehäuses 44 bis nach unten zum Bereich der Bodenplatte 54 gezogen und dort abgestützt, so dass sich eine noch fixere Abstandsfestlegung ergibt.

Zwischen dem oberen Teil 46 der Gehäuses und dem Gehäuse 44 im übrigen ist hier im Bereich der Bodenplatte eine Verschraubung 47 angebracht, die beide Teile gegeneinander verspannt und hierdurch die Dämpfungselemente 32 und 34 unter Druck setzt.

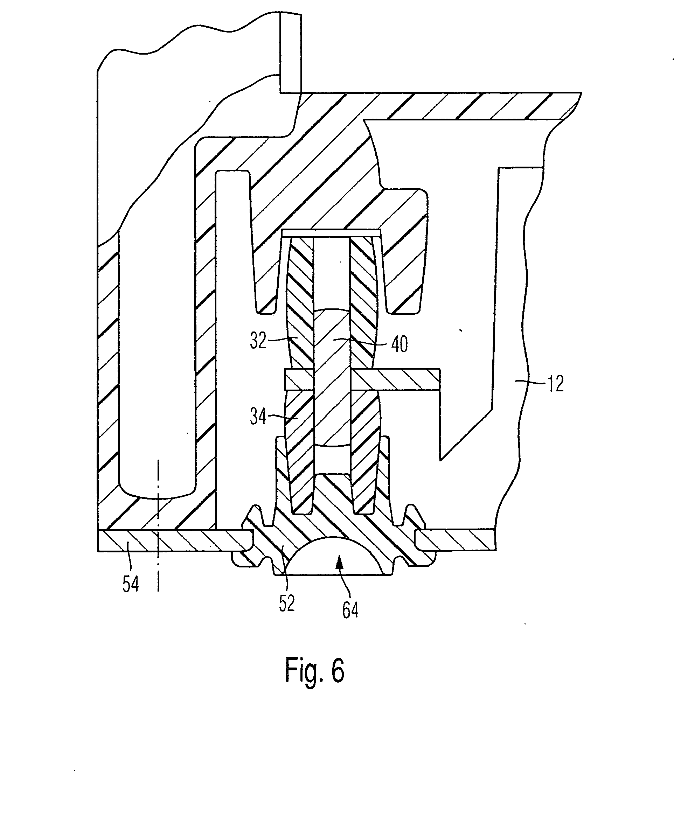

Die Abstandsfestlegung ist auch aus Fig. 6 in vergrößerter Darstellung ersichtlich.

## Patentansprüche

1. Dentalgerät, insbesondere dentales Mischgerät, mit einem Gehäuse und einem wenigstens teilweise im Gehäuse angeordneten Rahmen (12), der wenigstens einen Motor (14)sowie einen Mischarm (16) trägt und an mindestens zwei, bevorzugt mindestens drei, insbesondere vier, Lagerstellen (30) innerhalb des Gehäuses gelagert ist, wobei jede dieser Lagerstellen (30) zwischen einem oberen und einem unteren elastischen, vorgespannten Dämpfungselement (32, 34) eingespannt ist,
**dadurch gekennzeichnet, dass** sich das untere Dämpfungselement (34) an einer ersten, nach oben weisenden Anschlagfläche (58) und das obere Dämpfungselement (32) an einer zweiten, nach unten weisenden Anschlagfläche (50) des Gehäuses (44) abstützt.

2. Dentalgerät nach Anspruch 1, **dadurch gekennzeichnet, dass** das untere Dämpfungselement (34) auf einem Standfuss (52) abgestützt ist.

3. Dentalgerät nach Anspruch 1 oder 2, **dadurch gekennzeichnet, dass** ein Führungselement, insbesondere ein Führungsstift (40), wenigstens teilweise in das obere und das untere Dämpfungslement (32, 34) hineinragt und dass das Führungselement eine Durchtrittsöffnung des Rahmens (12) durchsetzt.

4. Dentalgerät nach einem der vorhergehenden Ansprüche, **dadurch gekennzeichnet, dass** das obere Dämpfungselement (32) weicher ist als das untere Dämpfungselement (34).

5. Dentalgerät nach einem der Ansprüche 3 oder 4, **dadurch gekennzeichnet, dass** jedes Dämpfungslement (32, 34) hülsenförmig ausgebildet ist und eine zentrale Durchgangsbohrung (42) aufweist, deren Durchmesser im Wesentlichen dem Durchmesser des Führungsstiftes (40) entspricht.

6. Dentalgerät nach einem der vorhergehenden Ansprüche, **dadurch gekennzeichnet, dass** die Dämpfungselemente (32, 34) aus einem Elastomerschaum, insbesondere aus Polyurethan, oder von einer Druckfeder oder von einem anpassbaren Luftkissen gebildet sind.

7. Dentalgerät nach einem der vorhergehenden Ansprüche, **dadurch gekennzeichnet, dass** die erste, nach oben weisende Anschlagfläche (58) des Gehäuses (44) Teil eines Standfusses (52) ist, der eine Durchgangsbohrung des Gehäuses (44) durchsetzt und das Gehäuse (44) in vertikaler Richtung nach unten überragt.

8. Dentalgerät nach Anspruch 7, **dadurch gekennzeichnet, dass** der Standfuss (52) das untere Dämpfungslement (34) abstützt und insbesondere aus einem harten Elastomer gebildet ist und dass insbesondere der untere Bereich des unteren Dämpfungselements (34) von dem Standfuss (52) umgeben ist.

9. Dentalgerät nach einem der Ansprüche 7 oder 8, **dadurch gekennzeichnet, dass** der Standfuss (52) an seiner Unterseite eine muldenartige Vertiefung (64) aufweist und an seiner kreisrunden Außenkontur eine umlaufende Nut (56) besitzt, in welche der Randbereich der Durchgangsbohrung des Gehäuses (44) ragt.

10. Dentalgerät nach einem der Ansprüche 3-9, **dadurch gekennzeichnet, dass** das Führungselement fest in der Durchtrittsöffnung des Rahmens (12) angeordnet ist.

11. Dentalgerät nach einem der vorhergehenden Ansprüche, **dadurch gekennzeichnet, dass** der Motor (14) und/oder der Mischarm (16) mit Hilfe wenigstens eines elastischen Lagerelementes an dem Rahmen (12) schwingend gelagert sind.

12. Dentalgerät nach einem der vorhergehenden Ansprüche,
**dadurch gekennzeichnet, dass** der Motor (14) und der Mischarm (16) über Federelemente (18) an dem im wesentlichen U-förmigen Rahmen gelagert ist.

13. Dentalgerät nach einem der Ansprüche 2-12, **dadurch gekennzeichnet, dass** durch die auf den Standfuß (52) einwirkende Kraft im Standfuß ein Kippmoment eingeleitet wird, das das mit dem Standfuß zusammenwirkende Gehäuse in dem Ausmaße anhebt, in welchem der Standfuß vertikal komprimiert wird.

14. Dentalgerät nach einem der vorhergehenden Ansprüche, **dadurch gekennzeichnet, dass** der Aufstandbereich jedes Standfusses (52) die Unterseite des Gehäuses (44) in vertikaler Richtung nach unten, insbesondere um weniger als einen Zentimeter, überragt.

15. Dentalgerät nach einem der Ansprüche 2-14, **dadurch gekennzeichnet, dass** der Standfuss (52) je im Wesentlichen kreissymmetrisch ausgebildet ist und eine vertikale Bewegungsachse aufweist, bezogen auf welche sich der Standfuss (52) bei Zunahme der Belastung symmetrisch verformt.

## Claims

1. A dental device, in particular a dental mixing device, comprising a housing and a frame (12) which is arranged at least partially in the housing and supports at least one motor (14) and a mixing arm (16) and is mounted on at least two, in particular four, bearings (30) within the housing, each of the bearings (30) being clamped between an upper and a lower elastic, pretensioned damping element (32, 34),
**characterized in that** the lower damping element (34) is supported on a first, upwardly facing abutment surface (58) and the upper damping element (32) is supported on a second, downwardly facing abutment surface (50) of the housing (44).

2. The dental device as claimed in claim 1, **characterized in that** the lower damping element (34) is supported on a stand foot (52).

3. The dental device as claimed in claim 1 or 2, **characterized in that** a guide element, in particular a guide pin (40), protrudes at least partially into the upper and lower damping element (32, 34) and that the guide element extends through a through-opening of the frame (12).

4. The dental device as claimed in one of the preceding claims, **characterized in that** the upper damping element (32) is softer than the lower damping element (34).

5. The dental device as claimed in claim 3 or 4, **characterized in that** each damping element (32, 34) has a sleeve-shaped design and has a central through-bore (42) whose diameter corresponds substantially to the diameter of the guide pin (40).

6. The dental device as claimed in one of the preceding claims, **characterized in that** the damping elements (32, 34) are made from an elastomer foam, in particular from polyurethane, or are formed by a compression spring or by an adjustable air cushion.

7. The dental device as claimed in one of the preceding claims, **characterized in that** the first, upwardly facing abutment surface (58) of the housing (44) is part of a stand foot (52) which extends through a through-bore of the housing (44) and protrudes down from the housing (44) in the vertical direction.

8. The dental device as claimed in claim 7, **characterized in that** the stand foot (52) supports the lower damping element (34) and in particular is made from a hard elastomer, and that in particular the lower area of the lower damping element (34) is surrounded by the stand foot (52).

9. The dental device as claimed in claim 7 or 8, **characterized in that** the stand foot (52) has a trough-like depression (64) on its underside and, on its circular outer contour, has a circumferential groove (56) into which the edge area of the through-bore of the housing (44) projects.

10. The dental device as claimed in claim 3 to 9, **characterized in that** the guide element is arranged fixedly in the through-opening of the frame (12).

11. The dental device as claimed in one of the preceding claims, **characterized in that** the motor (4) and/or the mixing arm (16) are mounted vibrationally on the frame (12) with the aid of at least one elastic bearing element.

12. The dental device as claimed in one of the preceding claims, **characterized in that** the motor (14) and the mixing arm (16) are mounted to the substantially U-shaped frame via spring elements (18).

13. The dental device as claimed in one of the claims 2 to 12, **characterized in that** the force acting on the stand foot (52) introduces a tilting moment in the stand foot, by which tilting moment the housing interacting with the stand foot is lifted to the extent to which the stand foot is vertically compressed.

14. The dental device as claimed in one of the preceding claims, **characterized in that** the tread area of each stand foot (52) protrudes vertically downward past the underside of the housing (44), in particular by less than one centimeter.

15. The dental device as claimed in one of the claims 2 to 14, **characterized in that** the stand foot (52) has in each case a substantially circular symmetrical shape and has a vertical axis of movement in relation to which the stand foot (52) deforms symmetrically as the load increases.

## Revendications

1. Appareil dentaire, en particulier appareil mélangeur dentaire, avec un boîtier et un cadre (12) logé au moins partiellement dans le boîtier, lequel supporte au moins un moteur (14) ainsi qu'un bras mélangeur (16) et est monté sur au moins deux, préférentiellement au moins trois, et en particulier quatre points d'appui (30) à l'intérieur du boîtier, chacun desdits points d'appui (30) étant fixé entre un élément d'amortissement supérieur et un élément d'amortissement inférieur (32, 34), élastiques et pré-contraints,
**caractérisé en ce que** l'élément d'amortissement inférieur (34) s'appuie contre une première surface de butée (58) orientée vers le haut, et l'élément d'amortissement supérieur (32) contre une deuxième surface de butée (50) du boîtier (44), orientée vers le bas.

2. Appareil dentaire selon la revendication 1, **caractérisé en ce que** l'élément d'amortissement inférieur (34) repose sur un pied d'appui (52).

3. Appareil dentaire selon la revendication 1 ou 2, **caractérisé en ce qu'**un élément de guidage, en particulier un axe de guidage (40), pénètre au moins partiellement dans l'élément d'amortissement supérieur et l'élément d'amortissement inférieur (32, 34), et **en ce que** ledit élément de guidage traverse une ouverture de passage du cadre (12).

4. Appareil dentaire selon l'une des revendications précédentes, **caractérisé en ce que** l'élément d'amortissement supérieur (32) est plus mou que l'élément d'amortissement inférieur (34).

5. Appareil dentaire selon la revendication 3 ou 4, **caractérisé en ce que** chaque élément d'amortissement (32, 34) est réalisé en forme de manchon et présente un alésage traversant (42) dont le diamètre correspond sensiblement au diamètre de l'axe de guidage (40).

6. Appareil dentaire selon l'une des revendications précédentes, **caractérisé en ce que** les éléments d'amortissement (32, 34) sont constitués d'une mousse élastomère, en particulier polyuréthane, ou d'un ressort de pression ou d'un coussin d'air ajustable.

7. Appareil dentaire selon l'une des revendications précédentes, **caractérisé en ce que** la première surface de butée (58) orientée vers le haut du boîtier (44) fait partie d'un pied d'appui (52) traversant un alésage traversant du boîtier (44) et dépassant du boîtier (44) vers le bas en direction verticale.

8. Appareil dentaire selon la revendication 7, **caractérisé en ce que** le pied d'appui (52) soutient l'élément d'amortissement inférieur (34) et est en particulier constitué d'un élastomère dur, et **en ce que** la zone inférieure de l'élément d'amortissement inférieur (34) est en particulier entourée par le pied d'appui (52).

9. Appareil dentaire selon la revendication 7 ou 8, **caractérisé en ce que** le pied d'appui (52) présente un évidement en forme de cuvette (64) sur sa face inférieure et est pourvu d'une rainure (56) périphérique sur son contour extérieur circulaire, où s'engage la partie de bordure de l'alésage traversant du boîtier (44).

10. Appareil dentaire selon l'une des revendications 3 à 9, **caractérisé en ce que** l'élément de guidage est fixement disposé dans l'ouverture de passage du cadre (12).

11. Appareil dentaire selon l'une des revendications précédentes, **caractérisé en ce que** le moteur (14) et/ou le bras mélangeur (16) sont montés de manière oscillante sur le cadre (12) au moyen d'au moins un élément d'appui élastique.

12. Appareil dentaire selon l'une des revendications précédentes, **caractérisé en ce que** le moteur (14) et le bras mélangeur (16) sont montés par des éléments à ressort (18) sur le cadre (12) sensiblement en forme de U.

13. Appareil dentaire selon l'une des revendications 2 à 12, **caractérisé en ce qu'**un couple de basculement est appliqué dans le pied d'appui par la force exercée sur le pied d'appui (52), lequel soulève le boîtier coopérant avec le pied d'appui dans une mesure où le pied d'appui est comprimé verticalement.

14. Appareil dentaire selon l'une des revendications précédentes, **caractérisé en ce que** la zone d'appui de chaque pied d'appui (52) dépasse de la face inférieure du boîtier (44) vers le bas en direction verticale, en particulier de moins d'un centimètre.

15. Appareil dentaire selon l'une des revendications 2 à 14, **caractérisé en ce que** le pied d'appui (52) est prévu sensiblement avec une symétrie circulaire et présente un axe de déplacement vertical, par rapport auquel le pied d'appui (52) se déforme symétriquement en cas d'accroissement de la contrainte.
